# FASCICULE DE BREVET EUROPEEN

(11) **EP 2 727 762 B1**
(45) Date de publication et mention de la délivrance du brevet: **16.09.2015**
(21) Numéro de dépôt: 13191371.7
(22) Date de dépôt: 04.11.2013
(51) Int. Cl.: B60N 2/24, B60N 2/42, B60N 2/427, B60N 3/06

(54) **Nacelle déformable pour véhicule**
Formveränderbare Gondel für Fahrzeug
Deformable cowling for vehicle

(30) Priorité: 05.11.2012 FR 1202993
(43) Date de publication de la demande: 07.05.2014
(73) Titulaire: NEXTER Systems, 42328 Roanne (FR)
(72) Inventeur: Germenot, Olivier, 18023 Bourges (FR); Timmer, Bernard, 18023 Bourges (FR)
(74) Mandataire: Chaillot, Geneviève

(56) Documents cités:
- EP-A1- 2 208 634
- WO-A1-2010/000970
- WO-A2-2006/124555

## Description

Le domaine technique de l'invention est celui des nacelles destinées à recevoir les passagers d'un véhicule susceptibles de subir des chocs de mines.

En cas de choc violent sous le plancher d'un véhicule, l'énergie du choc est répercutée via la caisse du véhicule sur les passagers. Cette énergie est dommageable pour les passagers et elle est transmise avec une brutalité d'autant plus forte que la caisse du véhicule est raide. Ainsi sur un véhicule militaire comportant une caisse blindée, la raideur est particulièrement élevée et en cas d'accident ou d'agression de type mine ou encore d'engin explosif improvisé, les passagers voient leur vie mise en danger.

Pour remédier à cela il est connu de découpler les passagers de la caisse du véhicule au moyen de nacelles suspendant les passagers et les équipements de bord au plafond du véhicule.

Le brevet EP 2 208 634 Al, l'état de latechnique le plus proche selon le préambule de la revendication 1, divulgue une nacelle de véhicule comportant un siège passager ainsi qu'un moyen d'absorption de l'énergie des chocs verticaux par le coulissement d'un piston dans un cylindre, le piston venant déformer des obstacles situés dans le cylindre durant son coulissement.

Le brevet FR2916390 enseigne une nacelle de pilotage d'un véhicule militaire destinée à être fixée au plafond du véhicule.

Cependant ce type de structure éloigne le passager de la caisse du véhicule, mais ne garantit pas forcément l'absorption optimale de l'énergie d'impact. En outre ce type de dispositif, s'il est employé pour un poste de pilotage, ne permet pas au pilote de conduire en ayant la tête sortie ou rentrée selon son choix.

Ainsi l'invention se propose de résoudre le problème de l'absorption de l'énergie d'un choc sur un véhicule militaire au niveau du poste d'un pilote ou d'un passager.

Avantageusement, selon une variante de l'invention, la nacelle permet d'assurer cette absorption tout en permettant au poste du pilote ou passager d'avoir une position tête rentrée ou une position tête sortie.

L'invention a pour objet une nacelle de véhicule destinée à être occupée par au moins un passager et à le protéger d'un choc provoqué par une mine, nacelle comportant une armature rigide destinée à être liée à une caisse du véhicule par un dispositif de fixation qui est situé au voisinage d'une première extrémité de l'armature, armature portant au moins un siège pour passager placé au voisinage d'une seconde extrémité de l'armature, l'armature comportant une zone déformable située entre les deux extrémités et apte à se déformer plastiquement sous l'influence du choc provoqué par ladite mine, le siège étant situé en porte à faux par rapport à la zone déformable, nacelle caractérisée en ce qu'elle forme ainsi un bras de levier apte à provoquer une flexion de la nacelle au niveau de la zone déformable.

Selon un mode de réalisation, le dispositif de fixation de la structure sur la caisse comporte une articulation et un moyen moteur destiné à faire pivoter l'armature autour de l'articulation afin de lever ou d'abaisser la nacelle par rapport à la caisse du véhicule.

Selon un mode de réalisation la nacelle comporte au moins un moyen cassable sous l'action d'un choc de mine, moyen cassable solidarisant l'armature avec la caisse du véhicule, moyen cassable situé entre la zone déformable et la seconde extrémité de l'armature.

Avantageusement, le moyen cassable comporte une glissière solidaire de la caisse du véhicule, moyen cassable comportant à une de ses extrémités une liaison pivot d'axe perpendiculaire à la glissière et destinée à coulisser dans la glissière suite à la rupture d'une goupille cisaillable solidarisant la glissière et la liaison pivot.

Avantageusement, le moyen cassable comporte un ressort destiné à raidir la nacelle et à accompagner les mouvements de la nacelle lors de son pivotement.

Avantageusement, le moyen cassable comporte un amortisseur destiné à absorber les oscillations de la nacelle.

Selon un mode de réalisation de l'invention, la nacelle comporte deux structures latérales tubulaires.

Avantageusement, la zone déformable comporte au moins un croisillon en forme de X dont chaque branche du X est solidaire d'un tube de la structure tubulaire.

L'invention sera mieux comprise à la lecture de la description suivante, description faite en référence aux dessins en annexes dans lesquels
La figure 1 représente une vue de trois quarts d'une nacelle selon l'invention.
La figure 2 représente une vue longitudinale de la cabine d'un véhicule équipé de la nacelle selon l'invention, en configuration tête rentrée.
La figure 3 représente une vue longitudinale de la cabine d'un véhicule équipé de la nacelle selon l'invention, en configuration tête sortie.
La figure 4 représente une vue de détail longitudinale d'une nacelle selon l'invention.
La figure 5 représente une vue de détail longitudinale d'une nacelle selon l'invention subissant un choc.

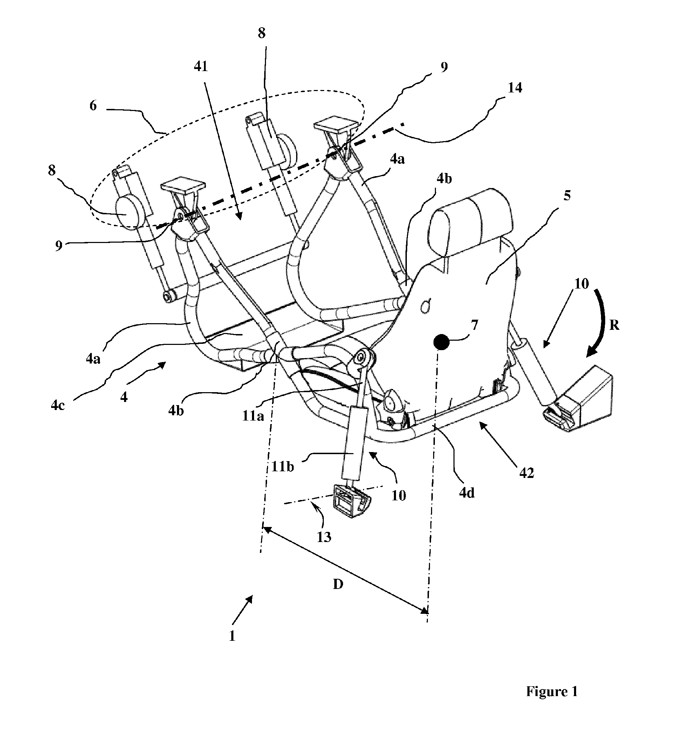

Selon la figure 1, une nacelle 1 pour véhicule (véhicule non représenté) comporte une armature 4 comportant un siège 5 occupable par un passager. L'armature 4 comporte deux structures latérales tubulaires 4a sensiblement parallèles et adoptant chacune une forme de huit couché horizontalement selon le sens longitudinal de la nacelle 1.

Chaque structure 4a est située de part et d'autre du siège 5 et comporte un croisillon central 4b en forme de X. Chaque branche du X relie entre eux les différents tubes de chaque structure latérale 4a.

Chacune des structures latérales 4a est reliée à l'autre par une repose pied 4c (formant entretoise) situé au niveau d'une première extrémité avant 41 de la nacelle 4 et par un tube transversal 4d placé juste au voisinage de l'arrière du siège 5 près de la seconde extrémité 42 de l'armature 4.

Selon le mode de réalisation représenté, la nacelle 4 comporte un dispositif de fixation 6 situé à l'avant de la nacelle 4. Ce dispositif de fixation a pour objet de solidariser la nacelle 4 avec la caisse du véhicule. Selon le mode de réalisation représenté, le dispositif de fixation 6 comporte un moyen moteur 8 qui comporte une paire de vérins hydrauliques 8 placés entre la caisse et une partie basse de la première extrémité 41 de l'armature 4a. Le dispositif de fixation 6 comporte, toujours selon le mode de réalisation illustré, une articulation 9 d'axe de rotation 14 transversal à l'axe longitudinal de la nacelle 4. L'articulation 9 comporte deux charnières 9 solidarisant une partie haute de la première extrémité 41 de l'armature 4a avec la caisse.

Ainsi, les moyens moteurs 8, en exerçant une poussée sur la partie basse de la nacelle, provoquent l'élévation de celle-ci par rotation autour de l'axe 14 de l'articulation 9. Cette rotation provoque en particulier la montée du siège 5 qui pourra permettre au passager de passer la tête à travers une trappe de toit (trappe non représentée). La redescente de la nacelle 1 jusqu'à la position basse, dite position de conduite, se fera par un mouvement inverse de rotation vers le bas.

Lorsque le siège 5 de la nacelle 4 est occupé, on considérera que la résultante des efforts d'inertie s'applique au point 7 (centre de gravité) situé juste au-dessus de l'assise du siège 5. On notera que le point 7 de la nacelle occupée est situé en porte-à-faux vis à vis des croisillons 4b créant ainsi un bras de levier de longueur D.

Le produit de la longueur du bras de levier D par les efforts appliqués au niveau du centre de gravité 7 génère un couple au niveau de chaque croisillon 4b. Chaque croisillon 4b de l'armature est choisi et dimensionné de manière privilégiée pour constituer une zone 4b déformable plastiquement lors d'un choc provoqué par la détonation d'une mine (ou d'un engin explosif improvisé) s'exerçant selon un axe vertical.

Selon d'autres modes de réalisation, l'homme du métier pourra par exemple réaliser l'armature de la nacelle sous la forme d'une poutre sensiblement horizontale comportant une zone déformable plastiquement située entre les deux extrémités de l'armature. La zone déformable pourra être obtenue par un amoindrissement de la section de la poutre, la poutre étant réalisée dans un matériau ductile.

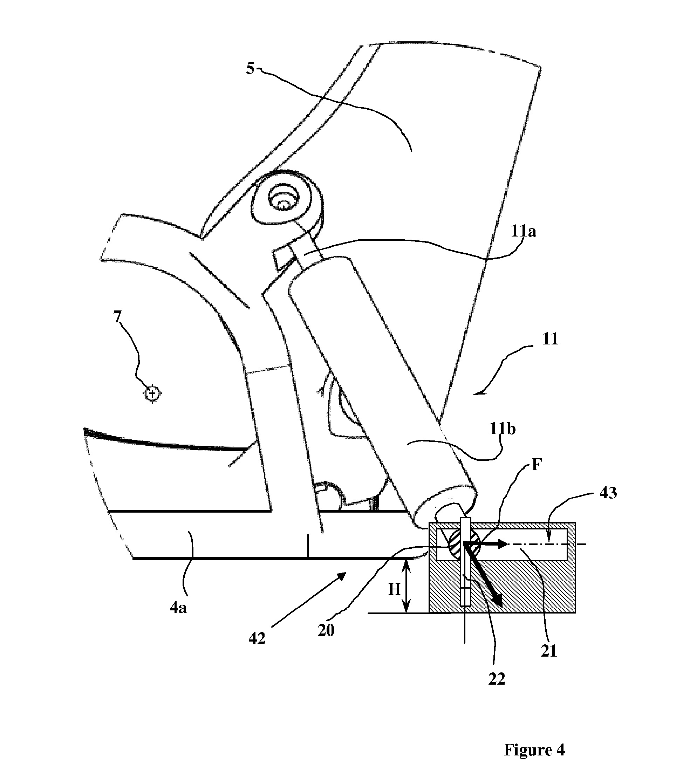

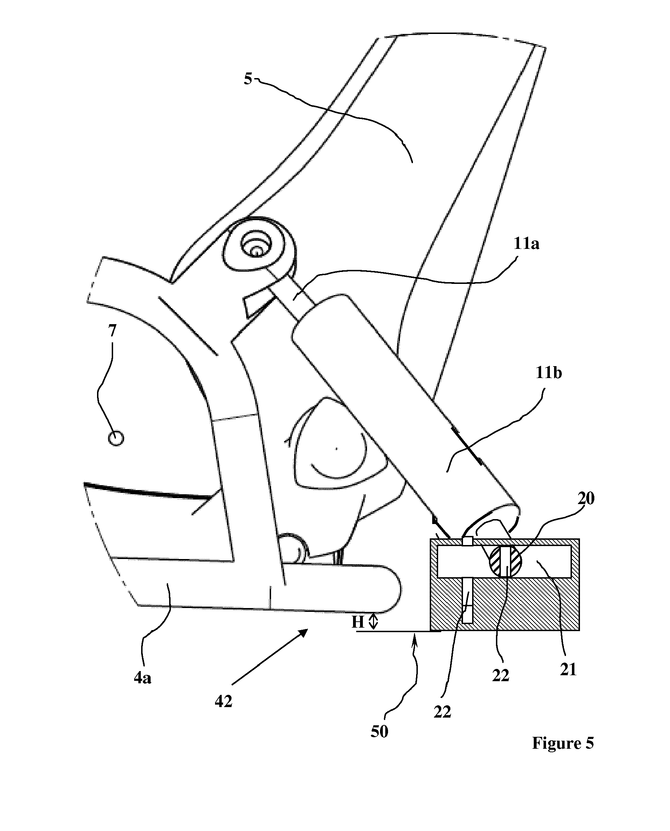

Ainsi lorsque le véhicule abritant une nacelle selon l'invention subit un choc de mine sous le plancher, l'effort généré par le choc engendre une flexion localisée de la nacelle au niveau d'une zone déformable 4b. Il s'en suit, dans le plan vertical P, un pivotement R vers le bas de la partie arrière 42 de la nacelle 1 autour des zones déformables 4b. En conséquence, on notera aux figures 4 et 5 une diminution de la hauteur H séparant le sol 50 de la cabine et la seconde extrémité 42 de la nacelle 1, comme suite au pivotement de la nacelle.

Ainsi l'énergie du choc de mine n'est pas transmise à l'occupant du siège 5.

La seconde extrémité 42 de la nacelle 1 comporte deux moyens cassables 10 situés de part et d'autre du siège 5.

Selon le mode de réalisation représenté, chaque moyen cassable 10 comporte un combiné ressort-amortisseur 11 comportant une tige 11a apte à coulisser dans un cylindre 11b.

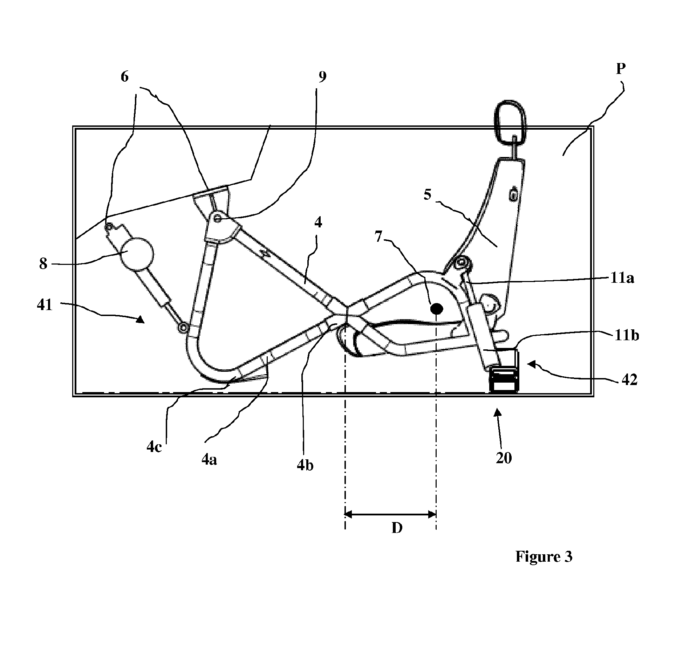

Le coulissement de la tige 11a dans le cylindre 11b permet à la nacelle 1 de se déployer vers le haut pour accompagner le mouvement de la nacelle 1 lors de son élévation (voir figure 3).

La tige 11a est solidaire d'un ressort contenu dans le cylindre 11b (ressort non visible). Le ressort est destiné à raidir la nacelle tout en permettant des mouvements de grande ampleur tels que pour obtenir le passage d'une position tête rentrée à une position tête sortie.

Le cylindre 11b comporte aussi un amortisseur solidaire de la tige et destiné à amortir les oscillations de la nacelle, par exemple lors du roulage du véhicule.

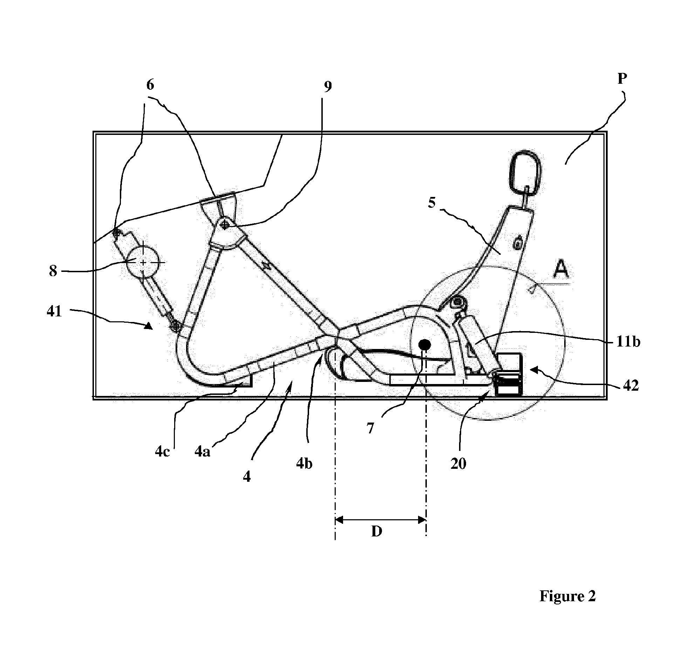

L'extrémité basse du moyen cassable 10 visible aux figures 2 et 3 est solidaire de la caisse. Cette extrémité comporte une liaison pivot 20, d'axe 13 parallèle à l'axe 14 de l'articulation 9, et qui sera mieux vue aux figures 4 et 5. La liaison pivot 20 a pour fonction de laisser à la nacelle 4 un degré de liberté en rotation suffisant lors des oscillations de celle-ci et surtout lors des opérations de montée ou descente de la nacelle 1 (passage d'une position tête entrée à une position tête sortie).

La liaison pivot 20 est solidaire d'une glissière 21 par une goupille cisaillable 22 constituant un moyen cassable.

Selon le mode de réalisation représenté, la glissière 21 est orientée sensiblement horizontalement et a son axe longitudinal 43 parallèle à un axe longitudinal de la nacelle 21. On notera que le combiné amortisseur 11 n'est pas perpendiculaire à l'axe longitudinal 43 de la glissière, afin qu'au moins une composante F de l'effort transmis par le combiné amortisseur soit parallèle à l'axe longitudinal de la glissière 21.

Ainsi, lors d'un choc de mine s'exerçant de bas en haut, au niveau des moyens cassables 10, La liaison pivot 20 va exercer un effort F sur la goupille 22 qui va se rompre et libérer la translation de l'axe du pivot 20 le long de l'axe longitudinal 43 de la glissière 21.

Une fois les moyens cassables 10 rompus, le couple C exercé par la nacelle 4 occupée va engendrer la déformation plastique du moyen déformable 4b. L'énergie du choc aura ainsi été en partie absorbée par la rupture de la goupille 22 et par la flexion de la zone déformable 4b.

On notera que la glissière 21 est dimensionnée pour permettre le coulissement du pivot 20 sur une course suffisante pour qu'il n'interfère pas avec l'extrémité de la glissière 21. On notera également, qu'une fois libéré, l'axe du pivot 20 ne peut pas heurter l'intérieur de la caisse car il a uniquement la possibilité de tourner sur lui-même et de glisser dans la glissière 21. La sécurité d'emploi est ainsi assurée.

On notera aussi que l'orientation de la glissière 21 permet de convertir un mouvement de course du pivot 20 qui devrait être vertical (en réaction à la direction du choc de mine) en un mouvement horizontal. Cette disposition de la glissière 21 permet de résoudre un problème d'encombrement des dispositifs de sécurité dans le cas où l'espace sous les points de solidarisation des moyens cassables 10 est réduit.

Il est évident pour l'homme du métier que d'autres orientations de la glissière relativement au combiné ressort-amortisseur 11 pourront être choisies en fonction de l'aménagement de la cabine.

## Revendications

1. Nacelle (1) de véhicule destinée à être occupée par au moins un passager et à le protéger d'un choc provoqué par une mine, comportant une armature rigide (4) destinée à être liée à une caisse du véhicule par un dispositif de fixation (6) qui est situé au voisinage d'une première extrémité (41) de l'armature (4), armature (4) portant au moins un siège (5) pour passager placé au voisinage d'une seconde extrémité (42) de l'armature (4), l'armature (4) comportant une zone déformable (4b) située entre les deux extrémités (41,42) et apte à se déformer plastiquement sous l'influence du choc provoqué par ladite mine, le siège (5) étant situé en porte à faux par rapport à la zone déformable (4b), nacelle (1) **caractérisée en ce qu'**elle forme ainsi un bras de levier apte à provoquer une flexion de la nacelle (1) au niveau de la zone déformable (4b).

2. Nacelle (1) de véhicule selon la revendication 1, **caractérisée en ce que** le dispositif de fixation (6) de la structure (4) sur la caisse comporte une articulation (9) et au moins un moyen moteur (8) destiné à faire pivoter l'armature (4) autour de l'articulation (9) afin de lever ou d'abaisser la nacelle (1) par rapport à la caisse du véhicule.

3. Nacelle (1) de véhicule selon une des revendications 1 ou 2, **caractérisée en ce que** la nacelle (1) comporte au moins un moyen cassable (10) sous l'action d'un choc de mine, moyen cassable (10) solidarisant l'armature (4) avec la caisse du véhicule, moyen cassable (10) situé entre la zone déformable (4b) et la seconde extrémité (42) de l'armature (4).

4. Nacelle (1) de véhicule selon la revendication 3, **caractérisée en ce que** le moyen cassable (10) comporte une glissière (21) solidaire de la caisse (4) du véhicule, moyen cassable (10) comportant à une de ses extrémités une liaison pivot (20) d'axe perpendiculaire à la glissière (21) et destinée à coulisser dans la glissière (21) suite à la rupture d'une goupille (22) cisaillable solidarisant la glissière (21) et la liaison pivot (20).

5. Nacelle (1) de véhicule selon les revendications 2 et 3, **caractérisée en ce que** le moyen cassable (10) comporte un ressort destiné à raidir la nacelle (1) et à accompagner les mouvements de la nacelle (1) lors de son pivotement.

6. Nacelle (1) de véhicule selon une des revendications 1 à 5, **caractérisée en ce que** le moyen cassable (10) comporte un amortisseur destiné à absorber les oscillations de la nacelle (1).

7. Nacelle (1) de véhicule selon une des revendications 1 à 6, **caractérisée en ce que** la nacelle (1) comporte deux structures latérales tubulaires (4a).

8. Nacelle (1) de véhicule selon la revendication 7, **caractérisée en ce que** la zone déformable comporte au moins un croisillon en forme de X dont chaque branche du X est solidaire d'un tube de la structure tubulaire (4).

## Patentansprüche

1. Fahrzeuggondel (1), die dafür bestimmt ist, mindestens einen Insassen aufzunehmen und ihn vor einem Stoß zu schützen, der von einer Mine hervorgerufen wird, aufweisend ein starres Gestell (4), das dafür bestimmt ist, dass es mit einer Karosserie des Fahrzeugs über eine Befestigungsvorrichtung (6) verbunden wird, die sich in der Nähe eines ersten Endes (41) des Gestells (4) befindet, wobei das Gestell (4) mindestens einen Insassensitz (5) trägt, der in der Nähe eines zweiten Endes (42) des Gestells (4) platziert ist, wobei das Gestell (4) einen verformbaren Bereich (4b) aufweist, der sich zwischen den beiden Enden (41, 42) befindet und in der Lage ist, sich unter der Einwirkung des Stoßes, der von der Mine hervorgerufen wird, plastisch zu verformen, wobei der Sitz (5) bezogen auf den verformbaren Bereich (4b) hervorsteht, wobei die Gondel (1) **dadurch gekennzeichnet ist, dass** sie so einen Hebelarm bildet, der in der Lage ist, eine Biegung der Gondel (1) in dem verformbaren Bereich (4b) hervorzurufen.

2. Fahrzeuggondel (1) nach Anspruch 1, **dadurch gekennzeichnet, dass** die Befestigungsvorrichtung (6) der Struktur (4) an der Karosserie ein Gelenk (9) und mindestens ein Motormittel (8) aufweist, das das Gestell (4) um das Gelenk (9) dreht, damit die Gondel (1) bezogen auf die Karosserie des Fahrzeugs angehoben oder abgesenkt wird.

3. Fahrzeuggondel (1) nach Anspruch 1 oder 2, **dadurch gekennzeichnet, dass** die Gondel (1) mindestens ein unter der Stoßwirkung einer Mine zerbrechliches Mittel (10) aufweist, wobei das zerbrechliche Mittel (10) das Gestell (4) fest mit der Karosserie des Fahrzeugs verbindet und sich das zerbrechliche Mittel (10) zwischen dem verformbaren Bereich (4b) und dem zweiten Ende (42) des Gestells (4) befindet.

4. Fahrzeuggondel (1) nach Anspruch 3, **dadurch gekennzeichnet, dass** das zerbrechliche Mittel (10) eine Gleitführung (21) aufweist, die fest mit der Karosserie (4) des Fahrzeugs verbunden ist, wobei das zerbrechliche Mittel (10) an einem seiner Enden eine Schwenkverbindung (20) mit einer zur Gleitführung (21) senkrechten Achse aufweist, die dafür bestimmt ist, nach dem Bruch eines Scherstifts (22), der die Gleitführung (21) und die Schwenkverbindung (20) fest miteinander verbindet, in der Gleitführung (21) verschoben zu werden.

5. Fahrzeuggondel (1) nach Anspruch 2 und 3, **dadurch gekennzeichnet, dass** das zerbrechliche Mittel (10) eine Feder aufweist, die dafür bestimmt ist, die Gondel (1) zu versteifen und den Bewegungen der Gondel (1) während des Drehens zu folgen.

6. Fahrzeuggondel (1) nach einem der Ansprüche 1 bis 5, **dadurch gekennzeichnet, dass** das zerbrechliche Mittel (10) einen Dämpfer aufweist, der dafür bestimmt ist, die Schwingungen der Gondel (1) aufzunehmen.

7. Fahrzeuggondel (1) nach einem der Ansprüche 1 bis 6, **dadurch gekennzeichnet, dass** die Gondel (1) zwei röhrenförmige seitliche Strukturen (4a) aufweist.

8. Fahrzeuggondel (1) nach Anspruch 7, **dadurch gekennzeichnet, dass** der verformbare Bereich mindestens ein X-förmiges Kreuz aufweist, wobei jeder Balken des X fest mit einem Rohr der röhrenförmigen Struktur (4) verbunden ist.

## Claims

1. A vehicle pod (1) designed to be occupied by at least one passenger and to protect him/her from an impact caused by a mine, comprising a rigid frame (4) designed to be connected to a vehicle body by a fixing device (6) which is located in the vicinity of a first end (41) of the frame (4), the frame (4) carrying at least one seat (5) for a passenger placed in the vicinity of a second end (42) of the frame (4), the frame (4) comprising a deformable zone (4b) located between both ends (41, 42) and able to plastically deform under the influence of an impact caused by said mine, the seat (5) being cantilevered with respect to the deformable zone (4), the pod (1) being **characterized in that** it forms a lever arm able to cause the pod (1) to bend at the deformable zone (4b).

2. The vehicle pod (1) according to claim 1, **characterized in that** the fixing device (6) of the structure (4) on the body comprises a joint (9) and at least one motor means (8) designed to pivot the frame (4) around the joint (9) so as to raise or lower the pod (1) with respect to the vehicle body.

3. The vehicle pod (1) according to one of claims 1 or 2, **characterized in that** the pod (1) comprises at least one means (10) breakable under the action of a mine impact, the breakable means (10) securing the frame (4) to the vehicle body, the breakable means (10) being located between the deformable zone (4b) and the second end (42) of the frame (4).

4. The vehicle pod (1) according to claim 3, **characterized in that** the breakable means (10) comprises a slide (21) secured to the vehicle body (4), the breakable means (10) comprising at one of its ends a pivot link (20) of an axis perpendicular to the slide (21) and designed to slide in the slide (21) following the rupture of a shearable pin (22) securing the slide (21) to the pivot link (20).

5. The vehicle pod (1) according to claims 2 and 3, **characterized in that** the breakable means (10) comprises a spring designed to stiffen the pod (1) and to follow the movements of the pod (1) during its pivoting.

6. The vehicle pod (1) according to one of claims 1 to 5, **characterized in that** the breakable means (10) comprises a damper designed to absorb the oscillations of the pod (1).

7. The vehicle pod (1) according to one of claims 1 to 6, **characterized in that** the pod (1) comprises two tubular side structures (4a).

8. The vehicle pod (1) according to claim 7, **characterized in that** the deformable zone comprises at least one X-shaped cross, of which each branch of the X is secured to a tube of the tubular structure (4).
